# FASCICULE DE BREVET EUROPEEN

(11) **EP 2 822 902 B1**
(45) Date de publication et mention de la délivrance du brevet: **18.05.2016**
(21) Numéro de dépôt: 13711090.4
(22) Date de dépôt: 04.03.2013
(51) Int. Cl.: C03B 3/00, C03B 5/00, C03B 5/235

(54) **ENFOURNEUSE AVEC TETE AMOVIBLE POUR ENFOURNEMENT IMMERGE**
SATZWEISE BESCHICKUNGSMASCHINE MIT ENTFERNBAREM KOPF FÜR UNTERGETAUCHTE SATZWEISE BESCHICKUNG
BATCH-CHARGING MACHINE WITH REMOVABLE HEAD FOR SUBMERGED BATCH-CHARGING

(30) Priorité: 05.03.2012 FR 1251966
(43) Date de publication de la demande: 14.01.2015
(73) Titulaire: Saint-Gobain Isover, 92400 Courbevoie (FR)
(72) Inventeur: VILLEROY de GALHAU, Grégoire, F-75016 Paris (FR); LEFRERE, Yannick, F-92240 Malakoff (FR); RAYER, Mathieu, F-75014 Paris (FR)
(74) Mandataire: Pöpping, Barbara
(86) Numéro de dépôt international: PCT/FR2013/050459
(87) Numéro de publication internationale: WO 2013/132184

(56) Documents cités:
- WO-A1-99/35099
- US-A- 1 761 229
- US-A- 2 479 805
- US-A- 4 290 797

## Description

La présente invention concerne une enfourneuse de matières vitrifiables comportant une tête formée par un registre à guillotine amovible, une installation de fusion de verre comportant une telle enfourneuse et un procédé de fusion de verre utilisant une telle installation.

Dans un four verrier, l'enfournement des matières premières vitrifiables se fait classiquement par dépôt de ces matières sur le bain de verre. Dans un four avec des brûleurs classiques situés au-dessus du niveau de verre, il est nécessaire d'humidifier les matières vitrifiables pour empêcher qu'elles ne soient emportées par les fumées chaudes (voir par exemple US 3,725,022 et US 6,349,570). Cette humidification préalable présente toutefois un coût énergétique non négligeable lié à l'évaporation de l'eau.

Il est par ailleurs connu de recycler des fibres minérales contenant des composants organiques (liant organique). Ce recyclage nécessite toutefois l'élimination préalable des composants organiques, généralement par combustion, au plus tard dans l'enfourneuse (voir par exemple EP 2 072 474). Une telle combustion préalable, immédiatement en amont du four, interdit toutefois l'humidification des matières fibreuses à recycler avant introduction dans le four.

Le but de la présente invention est de proposer un procédé et une installation de fusion de verre, permettant de remédier aux problèmes de volage des matières premières, en l'absence de toute humidification préalable, et ceci même pour des matières premières de recyclage, telles que la laine minérale, contenant une fraction importante de matières organiques. Dans le procédé de la présente invention, il n'est pas nécessaire de soumettre les matières premières à recycler à une étape de combustion préalable destinée à éliminer les composants organiques. Grâce au procédé de la présente invention, la laine de verre ou de roche contenant un liant organique, même en proportions importantes, peut être introduite dans le four telle quelle, c'est-à-dire sans combustion ni humidification préalable.

Ce but est atteint dans la présente invention grâce à l'utilisation conjointe
- d'un mode d'enfournement particulier, en dessous du niveau du bain de matières fondues, appelé ci-après « enfournement profond » ou « enfournement immergé », et
- de brûleurs immergés, permettant la combustion des composants organiques, introduits avec les matières premières à recycler, au coeur même du verre en fusion.

L'enfournement profond des matières vitrifiables limite très fortement le volage à des quantités acceptables pour le procédé. Les composants organiques des matières premières de recyclage ne sont plus considérés comme un ingrédient problématique à éliminer avant fusion, mais sont valorisés en tant que combustible améliorant ainsi le bilan énergétique du procédé. En effet, lorsque les matières organiques (papier, colle, liant polymère), introduites avec des matières premières de recyclage, entrent en contact avec le bain de verre chaud, une pyrolyse se produit et les gaz de pyrolyse brûlent au contact d'oxygène. Cet oxygène peut provenir des oxydes du bain de verre et la consommation de cet oxygène aboutit alors à une réduction du bain de verre. Ou bien il peut être présent dans l'atmosphère au dessus du bain de verre en fusion. Bien entendu, lorsque la fraction de matières organiques est importante, il est possible d'introduire de l'oxygène en conséquence, par exemple par des bouillonneurs d'oxygène ou des oxydants chimiques.

Le bilan énergétique du procédé de fusion de verre de la présente invention est également amélioré par l'absence d'humidification préalable des matières premières fibreuses ou particulaires.

L'utilisation des composants organiques, introduits avec les matières premières vitrifiables en tant que combustible, permet ainsi théoriquement le remplacement complet du combustible gazeux (gaz naturel) alimentant classiquement les brûleurs immergés par des combustibles liquides ou solides, par exemple des déchets organiques ou de la biomasse.

L'enfournement immergé utilisé dans la présente invention génère toutefois des contraintes et pose des problèmes de sécurité. L'existence d'une ouverture dans le flanc de la cuve du four en dessous du niveau du verre en fusion crée des risques de fuite en cas de défaillance du système d'étanchéité. Par ailleurs, en cas de défaillance de l'enfourneuse, toute intervention sur celle-ci nécessiterait le vidage et l'arrêt du four. Enfin, l'enfourneuse est soumise à des sollicitations thermiques considérablement plus importantes qu'une enfourneuse classique pour un enfournement au dessus du niveau du bain de verre.

Des systèmes d'enfournement immergé sont connus par exemple de US 4,290,797 ou US 2,479,805 ou WO 99/35099 ou bien US 1,761,229. Ce dernier décrit un dispositif d'enfournement immergé amovible comprenant un fourreau et un système hydraulique d'entraînement des matières vitrifiables.

Dans la présente invention, ces problèmes techniques découlant de l'enfournement immergé de matières premières vitrifiables ont été résolus grâce à une nouvelle enfourneuse, particulièrement adaptée au procédé de la présente invention. Cette enfourneuse comporte une tête amovible formée par un registre à guillotine dont au moins la partie mobile (guillotine) est traversée par un système de conduites internes pour la circulation d'un liquide de refroidissement. Le registre à guillotine permet la fermeture simple et rapide de l'ouverture d'enfournement sans arrêt préalable du four ni vidage de la cuve. Le refroidissement actif de la guillotine du registre, après fermeture, se traduit par la formation d'une croûte protectrice de matières solides et permet de prévenir la dégradation thermique de la tête de l'enfourneuse.

Le caractère amovible de la tête d'enfourneuse permet le retrait et/ou le remplacement rapide de l'enfourneuse d'une installation à cuve pleine. Enfin, l'insertion de la tête refroidie de l'enfourneuse entre le flanc de cuve et la pointe de l'enfourneuse éloigne cette dernière du bain de verre en fusion et la met à l'abri de sollicitations thermiques excessives.

La présente invention a ainsi pour objet une enfourneuse pour l'enfournement d'une composition de matières vitrifiables dans un four de fusion de verre à un niveau situé en dessous du niveau du verre fondu, comprenant
- un corps avec un fourreau et avec un système mécanique d'entraînement des matières vitrifiables, logé dans ledit fourreau,
- une tête avec un registre à guillotine, fixée de manière amovible sur l'extrémité du fourreau, et une pièce de raccord tubulaire fixée sur le registre à guillotine et destinée à être insérée au moins partiellement dans l'orifice d'enfournement prévue dans le flanc de cuve du four, le registre à guillotine et la pièce de raccord comportant un système de conduites internes pouvant être relié à une source de liquide de refroidissement.

Le corps de l'enfourneuse de la présente invention, c'est-à-dire le fourreau contenant un système mécanique d'entraînement des matières vitrifiables, ne comporte pas de caractéristiques techniques particulières. Le système mécanique d'entraînement des matières vitrifiables peut être par exemple un piston ou une ou plusieurs vis sans fin, le corps de l'enfourneuse étant alors par exemple de type extrudeuse mono-vis ou double vis classique.

Grâce au système de refroidissement de la tête de l'enfourneuse, le corps n'a pas besoin d'être activement refroidi pour être protégé contre la chaleur du four. Dans un mode de réalisation préféré de l'invention, ni le fourreau ni le système mécanique d'entraînement des matières vitrifiables ne comportent par conséquent un système de refroidissement actif, tel qu'un système de conduites pouvant être relié à une source de liquide de refroidissement.

Les dispositifs d'alimentation de l'enfourneuse sont également de type connu (trémie, extrudeuse secondaire etc.). L'enfourneuse présente en outre de préférence au moins un orifice d'entrée, situé en amont ou en aval du dispositif d'introduction des matières premières, servira à l'introduction d'un flux de gaz inerte (par exemple d'azote) en cours de fonctionnement. Ce flux de gaz inerte est destiné à purger l'oxygène et à prévenir la combustion prématurée des composants organiques dans le corps de l'enfourneuse.

Comme expliqué ci-avant, la tête de l'enfourneuse comporte un registre à guillotine fixé de préférence directement sur la pointe de l'enfourneuse et une pièce de raccord tubulaire fixé sur le registre à guillotine. La pièce de raccord tubulaire est de préférence à peu près coaxiale par rapport à la vis sans fin, c'est-à-dire l'axe de rotation de la vis sans fin se superpose à l'axe de symétrie de la section transversale du tube. La surface extérieure de la pièce de raccord est de préférence sensiblement cylindrique et viendra s'insérer dans l'orifice d'enfournement dans le flanc de cuve. Il va de soi que le diamètre extérieur de la pièce de raccord doit pour cela être très peu différent du diamètre de l'orifice d'enfournement, de manière à faciliter l'étanchéité de ce raccord. Cette étanchéité est assurée par la couche de verre solidifié qui se forme au contact de la pièce de raccord refroidie activement.

La surface interne de la pièce de raccord tubulaire n'est de préférence pas strictement cylindrique mais s'évase légèrement en direction du four. La pièce de raccord présente de préférence une surface interne globalement conique (cône tronqué) s'élargissant depuis l'extrémité en contact avec le registre à guillotine vers l'extrémité à distance de celui-ci. Cet élargissement ou évasement est principalement destiné à prévenir la formation d'un bouchon de matières premières partiellement fondu colmatant la lumière de la pièce de raccord et bloquant l'introduction régulière et sans à-coups des matières premières.

Le taux d'élargissement, ou l'angle d'ouverture, du cône tronqué de la surface interne de la pièce de raccord, est de préférence compris entre 7 et 13 °, en particulier entre 8 et 12 °, et idéalement entre 9 et 10 °.

Entre l'extrémité du fourreau et la pièce de raccord est situé le registre qui constitue une pièce essentielle de l'enfourneuse de la présente invention. Ce registre comporte une partie fixe et une partie mobile (guillotine).

La partie fixe du registre est fixée de manière amovible sur le fourreau de l'enfourneuse. L'ouverture du registre a de préférence une forme circulaire avec un diamètre proche de celui du diamètre interne de la pièce de raccord tubulaire, ces deux pièces formant ainsi un « canal d'enfournement » lisse par lequel les matières vitrifiables peuvent transiter sans risque de blocage.

Par ailleurs, le diamètre intérieur de la pièce de raccord tubulaire diffère de préférence d'au plus 20 %, en particulier d'au plus 10 %, et idéalement moins de 5 % du diamètre intérieur du fourreau de l'enfourneuse.

Au moins la partie mobile du registre comporte un système de conduites internes pouvant être relié à une source de liquide de refroidissement. Pendant le procédé de fusion de verre de la présente invention, on fait circuler, de préférence en permanence, un liquide de refroidissement dans le système de conduites internes de la guillotine et de la pièce de raccord tubulaire. Il est bien entendu possible de refroidir également la partie fixe du registre à guillotine au moyen d'un système de conduites internes. Un tel refroidissement n'est toutefois pas indispensable lorsque les systèmes de refroidissement des deux autres pièces (partie mobile, pièce de raccord) sont efficaces. Bien que le refroidissement actif de la pièce mobile ne soit en principe indispensable qu'en cas de fermeture du registre, il est préférable de la refroidir même à l'état ouvert afin de permettre une fermeture très rapide et éviter tout oubli de mise en route du système de refroidissement qui pourrait s'avérer néfaste.

Afin d'assurer la possibilité de fermeture rapide du registre en cas de besoin, il est important qu'en cours de fonctionnement, la pointe de la vis sans fin de l'enfourneuse ne dépasse pas le fourreau et ne coupe pas le plan de fermeture du registre à guillotine.

On pourrait toutefois concevoir de manière avantageuse un système mécanique permettant d'avancer et de reculer la vis sans fin par coulissement dans le fourreau, afin de pouvoir pousser en force un éventuel bouchon de matières vitrifiables formé dans le canal d'enfournement en cours d'enfournement ou après fermeture et réouverture du registre à guillotine.

La présente invention a également pour objet une installation de fusion de verre comportant une enfourneuse telle que décrite ci-avant et un four de fusion de verre avec un orifice d'enfournement situé en flanc de cuve en dessous du niveau théorique du verre défini par la position du déversoir de la matière fondue. La pièce de raccord tubulaire de l'enfourneuse est insérée au moins partiellement dans l'orifice d'enfournement du four.

Le four de fusion de verre de l'installation peut être chauffé à l'aide de moyens de chauffage connus tels que des brûleurs en voute, des résistances mécaniques, des électrodes ou des brûleurs immergés.

Dans un mode de réalisation préféré, l'installation de fusion de verre comporte des brûleurs immergés alimentés par un mélange air/combustible gazeux (par exemple gaz naturel) ou par un mélange oxygène/combustible gazeux. Le rapport molaire oxygène/combustible peut être sur-stoechiométrique, l'excès d'oxygène pouvant être ajusté de manière à fournir l'oxygène nécessaire à la combustion des gaz de pyrolyse formés dans la zone d'enfournement.

Enfin, l'invention a pour objet un procédé de fusion de verre utilisant une installation telle que décrite ci-avant.

Un tel procédé de fusion de verre comprend
- l'introduction d'une composition de matières vitrifiables dans un four de fusion de verre au travers d'un orifice d'enfournement situé en flanc de cuve du four, en dessous du niveau du verre en fusion, au moyen d'une enfourneuse selon l'invention, la tête de l'enfourneuse étant reliée par la pièce de raccord tubulaire à l'orifice d'enfournement de manière à ce que les matières vitrifiables entrent dans le four, *via* le registre à guillotine ouvert et la pièce de raccord tubulaire, à un niveau situé en dessous du niveau du verre en fusion, et
- le refroidissement de la tête de l'enfourneuse par circulation d'un liquide de refroidissement dans les systèmes de conduites internes du registre à guillotine, en particulier de la pièce mobile de celui-ci, et de la pièce de raccord tubulaire.

Le procédé de fusion de verre est un procédé continu. L'introduction de matières vitrifiables et le refroidissement sont par conséquent mis en oeuvre simultanément et de préférence en continu grâce à un apport continu de matières premières et de liquide de refroidissement.

En cas de besoin, par exemple en cas d'un blocage ou d'un dysfonctionnement de l'enfourneuse, la présence du registre à guillotine amovible permet la déconnexion de l'enfourneuse sans nécessité d'arrêt et de vidage du four. Le procédé de la présente invention comprend alors la fermeture du registre à guillotine et la séparation du corps de l'enfourneuse de la tête de celle-ci, cette dernière restant solidaire du four.

Au cas où la pièce mobile du registre à guillotine n'est pas refroidie activement lorsque le registre est ouvert, l'étape de fermeture doit bien évidemment être précédée ou être concomitante de la mise en route du refroidissement actif par circulation d'un liquide de refroidissement. Après fermeture, la guillotine refroidie se couvre rapidement d'une couche de verre solidifié qui constitue un moyen d'isolation thermique efficace entre le bain de verre en fusion et la guillotine.

Les matières vitrifiables introduites dans l'installation de fusion de la présente invention sont avantageusement au moins en partie des matières vitrifiables de recyclage telles que des fibres minérales, des bris de verre issus de déchets ménagers. La plupart des déchets recyclables contiennent une certaine fraction de matières organiques qu'il n'est pas nécessaire d'éliminer au préalable. Les matières de recyclage sont de préférence des fibres minérales liées ou non par un liant organique.

Grâce à la structure particulière de l'enfourneuse et au mode d'enfournement, les matières de recyclage peuvent constituer jusqu'à 100 % des matières vitrifiables. Elles représentent au moins 10 %, de préférence de 20 à 80 % de l'ensemble des matières vitrifiables.

La composition de matières vitrifiables contient avantageusement au moins 2 % en poids, de préférence de 5 % à 50 % en poids et en particulier de 10 % en poids à 40 % en poids de composants organiques, ce pourcentage étant rapporté au poids total des matières minérales et organiques alimentant l'enfourneuse.

Bien que le procédé selon l'invention puisse être mis en oeuvre avec des matières premières humides contenant jusqu'à 50 % en poids d'eau, l'un de ses avantages réside dans le fait qu'il n'est justement pas nécessaire d'humidifier les matières premières dans un but de réduire ou de supprimer le volage des particules et fibres (voir introduction). Dans un mode de réalisation préféré du procédé selon l'invention, la composition de matières vitrifiables contient par conséquent moins de 5 % d'eau, de préférence moins de 3 % d'eau.

La présente invention est à présent illustrée et expliquée plus en détail en référence aux figures annexées dans lesquelles
la figure 1 est une coupe en section transversale d'une enfourneuse à tête amovible selon l'invention insérée en flanc de cuve d'un four de fusion de verre à enfournement immergé, en position ouverte,
la figure 2 est une coupe en section transversale de la même enfourneuse en position fermée, et
la figure 3 est une vue en perspective de la partie mobile du registre à guillotine de l'enfourneuse des figures 1 et 2.

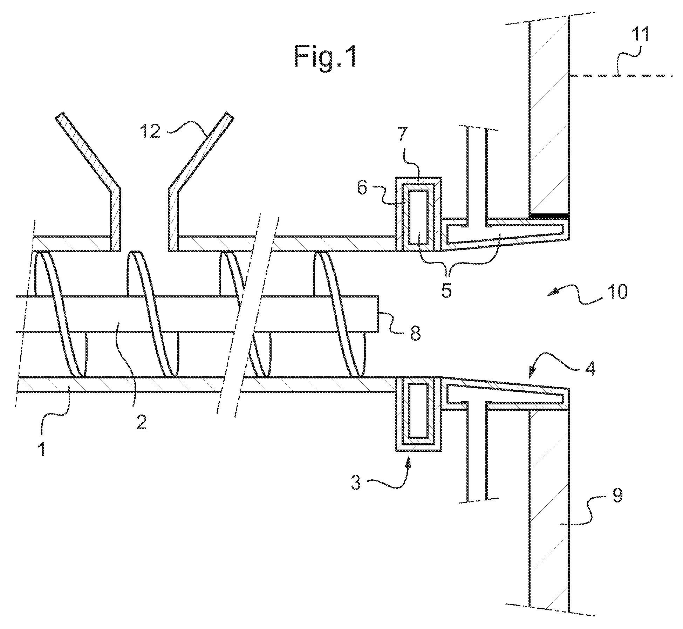

Plus particulièrement, sur la figure 1 est représenté le corps de l'enfourneuse comportant un fourreau 1 et une vis sans fin 2 logée dans ce fourreau. Une trémie 12 sur le fourreau permet l'introduction des matières premières (matières vitrifiables et composants organiques). La tête de l'enfourneuse comporte un registre à guillotine 3 et une pièce de raccord 4 tubulaire. Le registre à guillotine comporte une partie fixe 7 et une partie mobile 6, appelée guillotine. Sur la partie fixe 7 du registre 3 est fixé une pièce de raccord 4 tubulaire dont la surface interne s'élargit légèrement en direction du four dont seul le flanc de cuve 9 est représenté. La pièce de raccord tubulaire 4 est insérée dans l'orifice d'enfournement 10. La pièce de raccord 4 et la guillotine 6 du registre 3 sont parcourues chacune par un système de conduites internes 5 permettant la circulation d'un liquide de refroidissement. Sur cette figure 1 la guillotine 6 est en position ouverte, c'est-à-dire son ouverture circulaire se superpose à la section transversale circulaire du fourreau 1 et à la section transversale circulaire de la pièce de raccord 4, définissant ainsi un canal d'enfournement des matières premières débouchant dans l'orifice d'enfournement 10. Le niveau théorique du bain de verre 11 est représenté par des pointillés.

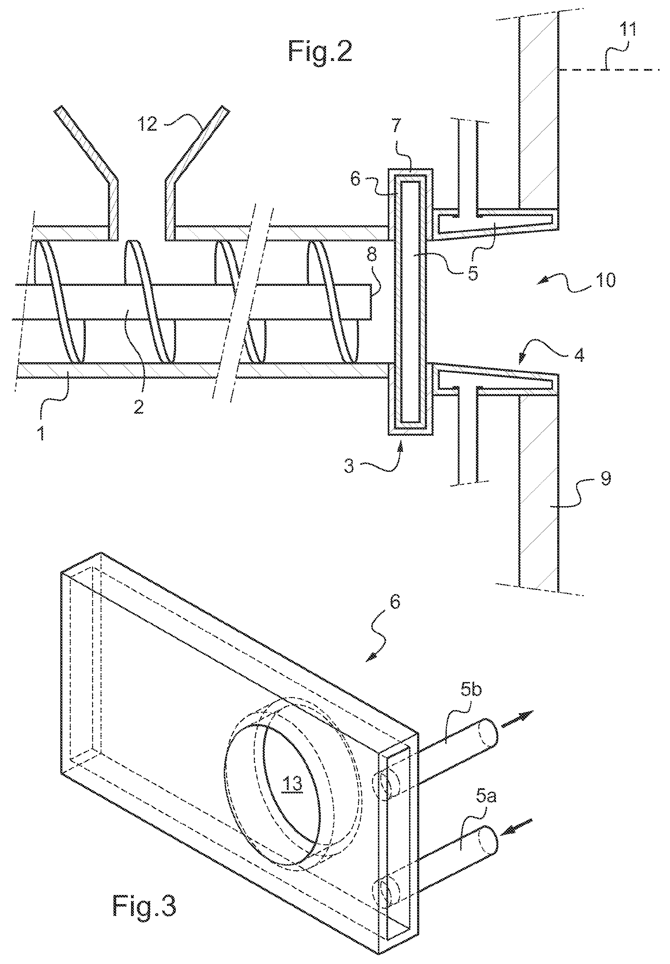

La figure 2 est en tous points identiques à la figure 1 à la seule différence près que la partie mobile 6 (guillotine) est fermée, coupant ainsi l'intérieur du fourreau 1 de la lumière de la pièce de raccord 4, et donc de l'intérieur du four.

La figure 3 montre la partie mobile 6 isolée de la partie fixe du registre et du reste de l'enfourneuse. Cette partie mobile 6, ou guillotine, est une plaque métallique creuse comportant, sur une moitié, une ouverture circulaire 13. Une première conduite d'arrivée 5a et une deuxième conduite de sortie 5b en communication avec la cavité de la plaque métallique creuse forment un système de conduites internes pour la circulation d'un liquide de refroidissement

## Revendications

1. Enfourneuse pour l'enfournement d'une composition de matières vitrifiables dans un four de fusion de verre à un niveau situé en dessous du niveau du verre fondu, comprenant
- un corps avec un fourreau (1) et un système mécanique d'entrainement (2) des matières vitrifiables, logé dans ledit fourreau,
- une tête avec un registre à guillotine (3), fixée de manière amovible sur l'extrémité du fourreau, et une pièce de raccord (4) tubulaire fixée sur le registre à guillotine et destinée à être insérée au moins partiellement dans l'orifice d'enfournement prévue dans le flanc de cuve du four, le registre à guillotine (3) et la pièce de raccord (4) comportant un système de conduites internes (5) pouvant être relié à une source de liquide de refroidissement.

2. Enfourneuse selon la revendication 1, **caractérisée par le fait que** le système mécanique d'entraînement (2) est un piston ou une vis sans fin, de préférence une vis sans fin.

3. Enfourneuse selon la revendication 1 ou 2, **caractérisée par le fait que** la pièce de raccord (4) tubulaire présente une surface interne globalement conique s'élargissant depuis l'extrémité en contact avec le registre à guillotine (3) vers l'extrémité à distance de celui-ci.

4. Enfourneuse selon la revendication 3, **caractérisé par le fait que** l'angle d'ouverture du cône tronqué de la surface interne de la pièce de raccord est compris entre 7 et 13 °, en particulier entre 8 et 12 °, et idéalement entre 9 et 10 °.

5. Enfourneuse selon l'une quelconque des revendications 2 à 4, **caractérisé par le fait qu'**elle est conçue de manière à ce que, en cours de fonctionnement, la pointe de la vis sans fin (2) ne dépasse pas le fourreau et ne coupe pas le plan de fermeture du registre à guillotine (3).

6. Enfourneuse selon l'une quelconque des revendications précédentes, **caractérisé par le fait que** le registre à guillotine comporte une partie fixe (7) et une partie mobile (6), au moins la partie mobile (6) comportant un système de conduites internes pouvant être relié à une source de liquide de refroidissement.

7. Enfourneuse selon l'une quelconque des revendications précédentes, **caractérisé par le fait que** ni le fourreau (1) ni le système mécanique d'entraînement (2) ne comportent un système de refroidissement actif, tel qu'un système de conduites pouvant être relié à une source de liquide de refroidissement.

8. Enfourneuse selon l'une quelconque des revendications précédentes, **caractérisé par le fait que** le diamètre intérieur de la pièce de raccord (4) tubulaire diffère d'au plus 20 %, de préférence d'au plus 10 %, du diamètre intérieur du fourreau de l'enfourneuse.

9. Installation de fusion de verre comportant
- un four de fusion de verre avec un orifice d'enfournement (10) situé en flanc de cuve en dessous du niveau théorique du verre défini par la position du déversoir de la matière fondue, et
- une enfourneuse selon l'une quelconque des revendications précédentes la pièce de raccord (4) de l'enfourneuse étant insérée au moins partiellement dans l'orifice d'enfournement (10) du four.

10. Installation de fusion de verre selon la revendication 9, **caractérisé par le fait que** le four comporte des brûleurs immergés.

11. Procédé de fusion de verre utilisant une installation selon l'une quelconque des revendications 9 ou 10.

12. Procédé de fusion selon la revendication 11, comprenant
- l'introduction, de préférence en continu, d'une composition de matières vitrifiables dans un four de fusion de verre au travers d'un orifice d'enfournement (10) situé en flanc de cuve du four, en dessous du niveau du verre en fusion, au moyen d'une enfourneuse selon l'une quelconque des revendications 1 à 7, la tête de l'enfourneuse étant reliée par la pièce de raccord (4) tubulaire à l'orifice d'enfournement (10) de manière à ce que les matières vitrifiables entrent dans le four, *via* le registre à guillotine (3) ouvert et la pièce de raccord (4) tubulaire, à un niveau situé en dessous du niveau du verre en fusion, et
- le refroidissement, de préférence en continu, de la tête de l'enfourneuse par circulation d'un liquide de refroidissement dans les systèmes de conduites internes (5) du registre à guillotine (3) et de la pièce de raccord (4).

13. Procédé de fusion de verre selon la revendication 11 ou 12, **caractérisé par le fait qu'**il comprend en outre, en cas de besoin, la fermeture du registre à guillotine (3) et la séparation du corps de l'enfourneuse de la tête de celle-ci, cette dernière restant solidaire du four.

14. Procédé de fusion de verre selon la revendication 11 à 13, **caractérisé par le fait que** les matières vitrifiables comportent des matières vitrifiables de recyclage, de préférence des fibres minérales.

15. Procédé de fusion de verre selon l'une quelconque des revendications 11 à 14, **caractérisé par** le fait la composition de matières vitrifiables contient au moins 2 % en poids, de préférence de 5 % à 50 % en poids et en particulier de 10 % en poids à 40 % en poids de composants organiques.

## Patentansprüche

1. Ofenbeschickung zum Zuführen einer Zusammensetzung von glasbildenden Stoffen in einen Glasschmelzofen auf einem Niveau, das sich unterhalb des Niveaus des geschmolzenen Glases befindet, folgendes umfassend
- einen Korpus mit einem Kanal (1) und einem mechanischen Antriebssystem (2) für die glasbildenden Stoffe, das im besagten Kanal untergebracht ist,
- einen Kopf mit einem Guillotine-Register (3), der am Ende des Kanals abnehmbar befestigt ist, und ein rohrförmiges Anschlussstück (4) das auf dem Guillotine-Register befestigt und dazu bestimmt ist, zumindest teilweise in die Beschickungsöffnung geschoben zu werden, die in der Schachtflanke des Ofens vorgesehen ist, wobei das Guillotine-Register (3) und das Anschlussstück (4) ein System von internen Leitungen (5) umfasst, das mit einer Kühlflüssigkeitsquelle verbunden werden kann.

2. Ofenbeschickung nach Anspruch 1, **dadurch gekennzeichnet, dass** das mechanische Antriebssystem (2) ein Kolben oder eine Endlosschnecke, vorzugsweise eine Endlosschnecke ist.

3. Ofenbeschickung nach Anspruch 1 oder 2, **dadurch gekennzeichnet, dass** das rohrförmige Anschlussstück (4) eine im Allgemeinen konische Innenfläche aufweist, die sich von dem Ende, das in Kontakt mit dem Guillotine-Register (3) steht, hin zum Ende im Abstand dazu erweitert.

4. Ofenbeschickung nach Anspruch 3, **dadurch gekennzeichnet, dass** der Öffnungswinkel des Kegelstumpfs der Innenfläche des Anschlussstücks zwischen 7 und 13°, im Speziellen zwischen 8 und 12° und idealerweise zwischen 9 und 10° liegt.

5. Ofenbeschickung nach irgendeinem der Ansprüche 2 bis 4, **dadurch gekennzeichnet, dass** sie derart gestaltet ist, dass die Spitze der Endlosschnecke (2) während des Betriebs nicht über den Kanal hinausragt und die Schließebene des Guillotine-Registers (3) nicht schneidet.

6. Ofenbeschickung nach irgendeinem der vorherigen Ansprüche, **dadurch gekennzeichnet, dass** das Guillotine-Register einen festen Abschnitt (7) und einen mobilen Abschnitt (6) umfasst, wobei zumindest der mobile Abschnitt (6) ein System an internen Leitern umfasst, das mit einer Kühlflüssigkeitsquelle verbunden werden kann.

7. Ofenbeschickung nach irgendeinem der vorherigen Ansprüche, **dadurch gekennzeichnet, dass** weder der Kanal (1), noch das mechanische Antriebssystem (2) ein aktives Kühlsystem, wie ein System an internen Leitern, das mit einer Kühlflüssigkeitsquelle verbunden werden kann, umfassen.

8. Ofenbeschickung nach irgendeinem der vorherigen Ansprüche, **dadurch gekennzeichnet, dass** der Innendurchmesser des rohrförmigen Anschlussstücks (4) um höchstens 20%, vorzugsweise um höchstens 10% vom Innendurchmesser des Kanals der Ofenbeschickung abweicht.

9. Glasschmelzanlage, folgendes umfassend
- einen Glasschmelzofen mit einer Beschickungsöffnung (10), die sich an der Schachtflanke unterhalb des theoretischen Glasniveaus befindet, das durch die Position des Überlaufs des geschmolzenen Materials definiert wird, und
- eine Ofenbeschickung nach irgendeinem der vorherigen Ansprüche, wobei das Anschlussstück (4) der Ofenbeschickung zumindest teilweise in die Beschickungsöffnung (10) des Ofens geschoben wird.

10. Glasschmelzanlage nach Anspruch 9, **dadurch gekennzeichnet, dass** der Ofen Tauchbrenner umfasst.

11. Glasschmelzverfahren unter Verwendung einer Anlage nach irgendeinem der Ansprüche 9 oder 10.

12. Schmelzverfahren nach Anspruch 11, folgendes umfassend
- die vorzugsweise ununterbrochene Beschickung einer Zusammensetzung von glasbildenden Stoffen in einen Glasschmelzofen durch eine Beschickungsöffnung (10), die sich an der Schachtflanke unterhalb des theoretischen Glasniveaus befindet, anhand einer Ofenbeschickung nach irgendeinem der Ansprüche 1 bis 7, wobei der Kopf der Ofenbeschickung über das rohrförmige Anschlussstück (4) mit der Beschickungsöffnung (10) verbunden ist, sodass die glasbildenden Stoffe durch das offene Guillotine-Register (3) und das rohrförmige Anschlussstück (4) auf einem Niveau in den Ofen eintreten, das sich unterhalb des Niveaus des geschmolzenen Glases befindet, und
- das vorzugsweise ununterbrochene Kühlen des Kopfes der Ofenbeschickung durch Zirkulation einer Kühlflüssigkeit in den internen Leitungssystemen (5) des Guillotine-Registers (3) und des Anschlussstücks (4).

13. Glasschmelzverfahren nach Anspruch 11 oder 12, **dadurch gekennzeichnet, dass** es darüber hinaus im Bedarfsfall das Schließen des Guillotine-Registers (3) und die Trennung des Korpus der Ofenbeschickung vom Kopf derselben umfasst, wobei dieser letztere fest mit dem Ofen verbunden bleibt.

14. Glasschmelzverfahren nach Anspruch 11 bis 13, **dadurch gekennzeichnet, dass** die glasbildenden Stoffe glasbildende Recycling-Materialien, und vorzugsweise Mineralfasern umfassen.

15. Glasschmelzverfahren nach irgendeinem der Ansprüche 11 bis 14, **dadurch gekennzeichnet, dass** die Zusammensetzung der glasbildenden Stoffe zumindest 2 Gew.-%, vorzugsweise 5 bis 50 Gew.-%, und im Speziellen von 10 Gew.-% bis 40 Gew.-% an organischen Komponenten umfasst.

## Claims

1. A batch charger for charging batch materials into a glass melting furnace at a level located below the level of the molten glass, comprising:
- a body with a barrel (1) and a mechanical conveying system (2) for conveying batch materials, said system being housed in said barrel;
- a head removably fastened to the end of the barrel, with a slide gate damper (3), and a tubular connecting part (4) fastened to the slide gate damper and intended to be at least partially inserted into the charging orifice provided in the wall of the tank of the furnace, the slide gate damper (3) and the connecting part (4) comprising a system of internal ducts (5) that can be connected to a source of coolant.

2. The batch charger as claimed in claim 1, **characterized in that** the mechanical conveying system (2) is a piston or a worm screw, and preferably a worm screw.

3. The batch charger as claimed in either of claims 1 and 2, **characterized in that** the tubular connecting part (4) has a substantially conical inside surface that flares from the end making contact with the slide gate damper (3) to the end a distance away from said damper.

4. The batch charger as claimed in claim 3, **characterized in that** the opening angle of the truncated cone of the inside surface of the connecting part is between 7 and 13°, in particular between 8 and 12°, and ideally between 9 and 10°.

5. The batch charger as claimed in any one of claims 2 to 4, **characterized in that** it is designed so that, during operation, the tip of the worm screw (2) does not extend beyond the barrel and does not cut the plane of closure of the slide gate damper (3).

6. The batch charger as claimed in any one of the preceding claims, **characterized in that** the slide gate damper comprises a fixed part (7) and a moveable part (6), at least the moveable part (6) comprising a system of internal ducts that can be connected to a source of coolant.

7. The batch charger as claimed in any one of the preceding claims, **characterized in that** neither the barrel (1) nor the mechanical conveying system (2) comprise an active cooling system such as a system of ducts that can be connected to a source of coolant.

8. The batch charger as claimed in any one of the preceding claims, **characterized in that** the inside diameter of the tubular connecting part (4) differs from the inside diameter of the barrel of the batch charger by 20% at most and preferably by 10% at most.

9. An installation for melting glass, comprising:
- a glass melting furnace with a charging orifice (10) located in the wall of tank of the furnace below the theoretical level of the glass, which level is defined by the position of the spillway of the molten material; and
- a batch charger according to any one of the preceding claims,
the connecting part (4) of the batch charger being at least partially inserted in the charging orifice (10) of the furnace.

10. The installation for melting glass as claimed in claim 9, **characterized in that** the furnace comprises submerged burners.

11. A process for melting glass using an installation as claimed in either one of claims 9 and 10.

12. The melting process as claimed in claim 11, comprising:
- feeding, preferably continuously, batch materials into a glass melting furnace through a charging orifice (10) located in the wall of the tank of the furnace, below the level of the molten glass, by means of a batch charger as claimed in any one of claims 1 to 7, the head of the batch charger being connected by the tubular connecting part (4) to the charging orifice (10) so that the batch materials enter into the furnace, *via* the open slide gate damper (3) and the tubular connecting part (4), at a level located below the level of the molten glass; and
- cooling, preferably continuously, the head of the batch charger by flowing a coolant through the systems of internal ducts (5) of the slide gate damper (3) and the connecting part (4).

13. The glass melting process as claimed in either of claims 11 and 12, **characterized in that** it furthermore comprises, when required, closing the slide gate damper (3) and separating the body of the batch charger from the head of the latter, the head remaining securely fastened to the furnace.

14. The glass melting process as claimed in claims 11 to 13, **characterized in that** the batch materials comprise materials for recycling, preferably mineral fibers.

15. The glass melting process as claimed in any one of claims 11 to 14, **characterized in that** the composition of the batch materials contains at least 2 wt%, preferably from 5 wt% to 50 wt%, and in particular from 10 wt% to 40 wt% of organic components.
